(19) Europäisches Patentamt / European Patent Office / Office européen des brevets

(11) **EP 3 229 088 B1**

(12) **EUROPÄISCHE PATENTSCHRIFT**

(45) Veröffentlichungstag und Bekanntmachung des Hinweises auf die Patenterteilung:
**19.08.2020   Patentblatt 2020/34**

(51) Int Cl.:
**B23F 23/12** *(2006.01)*     **G05B 19/401** *(2006.01)*

(21) Anmeldenummer: **16164347.3**

(22) Anmeldetag: **08.04.2016**

(54) **VERFAHREN ZUM ÜBERWACHEN DER MASCHINENGEOMETRIE EINER VERZAHNUNGSBEARBEITENDEN MASCHINE UND VORRICHTUNG MIT  EINER VERZAHNUNGSBEARBEITENDEN MASCHINE, EINER  MESSEINRICHTUNG UND EINEM SOFTWAREMODUL**

METHOD FOR MONITORING THE MACHINE GEOMETRY OF A TOOTH MACHINING MACHINE AND DEVICE WITH A TOOTH MACHINING MACHINE, A MEASURING DEVICE AND A SOFTWARE MODULE

PROCEDE DE SURVEILLANCE DE LA GEOMETRIE D'UNE MACHINE A TAILLER LES ENGRENAGES ET DISPOSITIF COMPRENANT UNE MACHINE A TAILLER LES ENGRENAGES, D'UN DISPOSITIF DE MESURE ET D'UN MODULE DE LOGICIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.10.2017   Patentblatt 2017/41**

(73) Patentinhaber: **Klingelnberg AG**
**8050 Zürich (CH)**

(72) Erfinder: **Müller, Hartmuth**
**42857 Remscheid (DE)**

(74) Vertreter: **Heusch, Christian**
**Ant-IP GmbH**
**Kirchplatz 2**
**82387 Antdorf (DE)**

(56) Entgegenhaltungen:
EP-A1- 1 712 875       EP-A1- 2 923 790
WO-A1-00/50965        DE-A1-102005 050 205
DE-A1-102007 009 275  DE-A1-102012 202 599
DE-A1-102012 202 609

**Beschreibung**

Die vorliegende Erfindung betrifft Verfahren zum Überwachen der Maschinengeometrie einer verzahnungsbearbeitenden Maschine und Vorrichtung mit einer verzahnungsbearbeitenden Maschine, einer Messeinrichtung und mit einem Softwaremodul, das zum Überwachen der Maschinengeometrie ausgelegt ist.

Stand der Technik

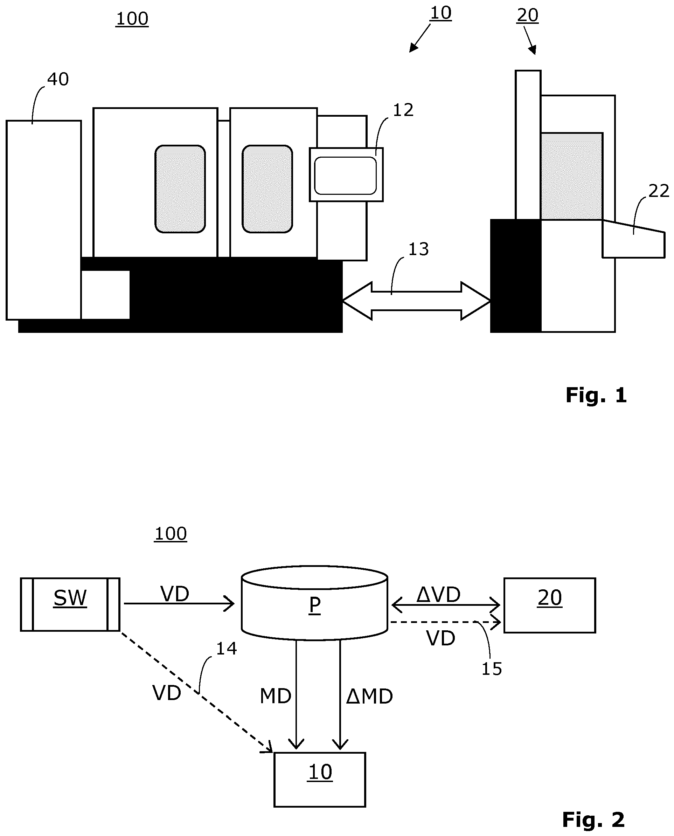

In Fig. 1 ist eine schematisierte Ansicht einer verzahnungsbearbeitenden Maschine 10 des Standes der Technik (z.B. eine Zahnrad-Fräsmaschine oder eine Zahnrad-Schleifmaschine) und eine Messeinrichtung 20 (hier in Form einer separaten Messvorrichtung) des Standes der Technik (z.B. eine Koordinaten- Messeinrichtung) gezeigt. Die Verzahnmaschine 10 und die Messeinrichtung 20 können miteinander gekoppelt sein, wie durch den Doppelpfeil 13 angedeutet. Der Begriff Kopplung wird verwendet, um anzudeuten, dass die Maschine 10 und die Messeinrichtung 20 zumindest kommunikationstechnisch (d.h. für den Datenaustausch) gekoppelt sind. Diese kommunikationstechnische Kopplung (auch Vernetzung genannt) setzt voraus, dass die Maschine 10 und die Messeinrichtung 20 das gleiche oder ein kompatibles Kommunikationsprotokoll verstehen und dass beide gewissen Konventionen folgen, was den Datenaustausch anbelangt.

Der Begriff Kopplung kann auch bedeuten, dass die Maschine 10 und die Messeinrichtung 20 nicht nur vernetzt sondern auch mechanisch miteinander verbunden oder komplett integriert sind.

Die Maschine 10 und die Messeinrichtung 20 können auch einen geschlossenen Bearbeitungs- und Kommunikationskreis (closed-loop genannt) bilden.

Aus den beiden Dokumenten DE102012202609A1 und DE102012202599A1, die beide dem gleichen Anmelder zugeschrieben werden, ist ein elektronisches System und Verfahren bekannt, das dem Kompensieren von Dimensionsabweichungen in einer Fertigungsumgebung dient. Nach der Bearbeitung einer Anzahl von Werkstücken in einer CNC-Maschine werden anhand eines statistischen Auswahlverfahrens eine Teilmenge von Werkstücken ausgewählt und in einer Koordinaten-Messmaschine vermessen. Die Teiledaten, die auf diesem Weg gewonnen werden, werden in einem Kompensationsprozessor mit Einrichtungsinformationen verglichen. Die Einrichtungsinformation kann zum Beispiel die zu bearbeitenden Werkstücke definieren. Der Kompensationsprozessor führt Koordinatentransformationen durch, um Koordinatensysteme, die dem jeweiligen Werkstück zugeordnet sind, mit dem Koordinatensystem der CNC-Maschine in Bezug zu setzen. Aus lokalen und globalen Abweichungen, die an den Werkstücken der Teilmenge ermittelt wurden, werden Versätze berechnet, die beim Bearbeiten weiterer Werkstücke in der CNC-Maschine Berücksichtigung finden.

Die verschiedenen Achsen der Maschine 10 und/oder die verschiedenen Achsen der Messeinrichtung 20 können beispielsweise von einer gemeinsamen NC-Steuerung 40 kontrolliert werden. Es handelt sich bei denjenigen Achsen, die von einer NC-Steuerung 40 kontrolliert werden, um numerisch kontrollierte Achsen. Durch eine solche Konstellation können die einzelnen Achs-Bewegungen numerisch von der NC-Steuerung 40 gesteuert werden. Wichtig ist, dass die einzelnen Bewegungsabläufe der Achsen der Maschine 10 und/oder der Achsen der Messeinrichtung 20 koordiniert erfolgen. Diese Koordinierung wird durch die NC-Steuerung 40 vorgenommen.

Es ist aber auch möglich, sowohl die Maschine 10 als auch die Messeinrichtung 20 je mit einer eigenen NC-Steuerung auszustatten. In diesem Fall kann die Vernetzung zum Datenaustausch z.B. zwischen den NC-Steuerungen (z.B. über ein Netzwerk) etabliert werden.

Anhand der Fig. 2 werden nun beispielhaft die typischen Abläufe von der Auslegung eines Zahnrads bis zu dessen Produktion und anschließenden Vermessung erläutert. Es handelt sich um ein stark schematisiertes Diagramm in Blockdarstellung. Es gibt auch andere Ansätze, die vergleichbare Ergebnisse liefern.

Mit einer geeigneten Software SW1 (z.B. mit der Software KOMET™ der Firma Klingelnberg GmbH, Deutschland) wird der Soll-Ease-Off für ein Zahnradpaar (hier als Zahnradpaar Tn, Rn bezeichnet) vorgegeben. Die Software SW1 kann z.B. am Ende eines Auslegungsprozesses den Soll-Ease-Off in Form eines Datensatz, der z.B. wie eine Matrix organisiert sein kann, bereitstellen. Dieser Datensatz definiert im Prinzip die Paarung eines Tellerrades T1 und eines Ritzels R1. Anhand des Datensatzes kann die hierzu erforderliche Maschinenkinematik für das Läppen der beiden Räder T1, R1 ermittelt werden

Die Maschinenkinematik kann z.B. anhand eines (Daten-) Modells der zu verwendenden Maschine 10 errechnet werden.

Da es auch andere Ansätze gibt, um die Geometrie eines zu fertigenden oder zu bearbeitenden Werkstücks 1 vorzugeben, wird im Folgenden für die entsprechenden Daten der Oberbegriff Vorgabedaten VD verwendet. Die Vorgabedaten VD sind dadurch definiert, dass sie mindestens die Form (Makro-Geometrie) eines zu fertigenden Werkstücks 1 beschreiben. Die Vorgabedaten VD können zusätzlich auch die Mikro-Geometrie beschreiben, die z.B. anhand einer rechnerischen Zahnkontaktanalyse ermittelt wurden. Die Vorgabedaten VD können weiterhin auch die Maschinenkinematik beschreiben (wobei z.B. anhand eines Models der zu verwendenden Maschine 10 die kinematischen Beziehungen der Verzahnmethode sowie die Einstellwerte der Maschine 10 ermittelt werden) oder die Maschinenkinematik kann in Form eines zusätzlichen (separaten) Datensatzes bereitgestellt werden. Die Vorgabedaten VD können auch statt der Mikro-Geometrie lediglich die Maschinenkinematik beschreiben.

Diese Vorgabedaten VD können zum Beispiel an einen Prozess P (z.B. die Software COP™ der Firma Klingelnberg GmbH, Deutschland) übergeben werden, wie in Fig. 2 dargestellt. Der Prozess P, der z.B. als Softwaremodul realisiert sein kann, übersetzt im gezeigten Beispiel die Vorgabedaten VD in Maschinendaten MD (teilweise auch Maschinencode oder Prozessdaten genannt), die von der NC-Steuerung der Maschine 10 in koordinierte Bewegungsabläufe umgesetzt werden.

Je nach Ausführungsform können die Vorgabedaten VD zusammen mit der Maschinenkinematik aber auch direkt an eine geeignete Maschine 10 übergeben werden, wie in Fig. 2 anhand des optionalen Pfades 14 angedeutet.

Die Maschine 10 bearbeitet nun das Werkstück 1, wie anhand der Maschinendaten MD vorgegeben. Nachdem diese Bearbeitung (hier auch Verzahnungsbearbeitung genannt) abgeschlossen wurde, wird das Werkstück 1 (direkt oder indirekt) an die Messeinrichtung 20 übergeben. In der Messeinrichtung 20 wird ein vordefinierter Messablauf durchgeführt, um zu prüfen, ob einer oder mehrere der aktuellen Werte (hier Istdaten genannt) des Werkstücks 1 mit den Vorgaben der Auslegung (hier den Vorgabedaten VD) übereinstimmen. Im Idealfall ist das Werkstück 1 absolut identisch mit der Auslegung, d.h. die Istdaten entsprechen den Vorgabedaten VD. In diesem Fall, der von rein theoretischer Bedeutung ist, können die Maschinendaten MD z.B. gespeichert werden, um weitere identische Werkstücke 1 (z.B. in Serie) zu verzahnen.

In der Praxis werden jedoch beim Messen Abweichungen (hier mit ΔVD bezeichnet) zwischen den Istdaten und den Vorgabedaten VD ermittelt. Diese Abweichungen ΔVD können beispielsweise von der Messeinrichtung 20 an den Prozess P geliefert werden (in diesem Fall müssten die Vorgabedaten VD auch an die Messeinrichtung 20 übermittelt werden, wie in Fig. 2 durch den Pfad 15 angedeutet). Je nach Ausführungsform kann nun z.B. der Prozess P Korrekturwerte ΔMD für die Steuerung der Maschine 10 ermitteln und an die Maschine 10 übermitteln. Es ist aber auch möglich, dass der Prozess P die Abweichungen ΔVD aus Messwerten ermittelt, die von der Messeinrichtung 20 bereitgestellt werden.

Die Maschine 10 kann entweder das zuvor verzahnte und dann gemessene Werkstück 1 nachbearbeiten (unter Berücksichtigung der Korrekturwerte ΔMD) oder die Korrekturwerte ΔMD werden ab der Bearbeitung der nachfolgenden Werkstücke 1 berücksichtigt.

Die Abläufe, die in einem solchen vernetzten Bearbeitungsumfeld 100 durchgeführt werden, sind mittlerweile hochgenau und robust. Bereits heute können komplexe Verzahnungen schnell, präzise und kostengünstig produziert werden.

Die erwähnten Abweichungen ΔVD können dazu eingesetzt werden, um die geometrischen Einstellwerte der Maschine 10 rechnerisch anzupassen. Das ist möglich, weil sich die geometrischen Einstellwerte beim beschriebenen Ansatz von den Kinematikwerten trennen lassen. Bei einer Maschine 10 mit drei NC-gesteuerten Linearachsen X, Y, Z und einer NC-gesteuerten Schwenkachse C, lassen sich z.B. die Vorgabedaten VD daher direkt in geometrische Einstellwerte der Achsen X, Y, Z und C umsetzen. Wenn nun Abweichungen ΔVD vorliegen, dann können diese Abweichungen ΔVD in geänderte geometrische Einstellwerte der Achsen umgesetzt werden. Diese geänderten geometrischen Einstellwerte der Achsen werden hier wie folgt bezeichnet: X*, Y*, Z* und C*.

Daraus ergeben sich quasi Referenzmaßänderungen, wie folgt:

$$\Delta X_{ref} = X^* - X$$

$$\Delta Y_{ref} = Y^* - Y$$

$$\Delta Z_{ref} = Z^* - Z$$

$$\Delta C_{ref} = C^* - C.$$

Der beschriebene closed-loop Ansatz, aber auch andere, ähnlich geartete vernetzte Lösungen, ermöglichen somit eine fortschreitende Optimierung der Referenzmaße einer Maschine 10.

Es stellt sich nun die Aufgabe einen technischen Ansatz zum zuverlässigen und rechtzeitigen Ermitteln von Veränderungen einer Maschine, oder eines Bearbeitungsumfelds bereit zu stellen.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche. Die Aufgabe wird erfindungsgemäß auch durch eine Vorrichtung (Bearbeitungsumfeld genannt) gemäß Patentanspruch 9 gelöst.

Die Erfindung basiert auf dem Bereitstellen einer statistischen Langzeitauswertung und einer statistischen Kurzzeitauswertung sowie auf dem in Bezug Setzen dieser beiden Auswertungen. Bei dem in Bezug Setzen werden Regeln und/oder Bedingungen zur Anwendung gebracht, um zu ermitteln, ob per Definition eine deutliche Abweichung vorliegt.

Das Bereitstellen der statistischen Langzeitauswertung und der statistischen Kurzzeitauswertung, sowie das in Bezug Setzen dieser beiden Auswertungen wird bei allen Ausführungsformen von einem Analysemodul durchgeführt.

Der Begriff Analysemodul wird hier verwendet, um eine Funktionsgruppe zu umschreiben, die in Hardware, Software oder als Kombination aus Hard- und Software realisiert ist. Vorzugsweise kommt bei allen Ausführungsformen ein Analysemodul in Form eines Softwaremoduls zum Einsatz, das dazu ausgelegt ist auf einem geeigneten Rechner installiert zu werden, um dort die Schritte des erfindungsgemäßen Verfahrens auszuführen und/oder um dort deren Ausführung zu kontrollieren. Dieser Rechner, respektive das Analysemodul, kann bei allen Ausführungsformen auch Teil einer Maschine und/oder einer Messeinrichtung sein.

Vorzugsweise handelt es sich bei der statistischen Kurzzeitauswertung bei allen Ausführungsformen um eine gleitende statistische Auswertung, die jeweils nur eine vorgegebene Anzahl neuerer Messungen oder die neusten Messungen innerhalb eines vorgegebenen Zeitfensters berücksichtigt.

Die Maschine und die Messeinrichtung der Erfindung sind vorzugsweise bei allen Ausführungsformen mit dem Analysemodul vernetzt oder vernetzbar.

Die Maschine und die Messeinrichtung der Erfindung können nicht nur vernetzt sondern auch mechanisch miteinander verbunden oder komplett integriert sein.

Die Maschine und die Messeinrichtung der Erfindung können auch einen geschlossenen Bearbeitungs- und Kommunikationskreis (closed-loop genannt) bilden, wobei das Analysemodul zu Kommunikationszwecken mit dem Bearbeitungs- und Kommunikationskreis verbindbar ist.

Es geht bei der Erfindung auch darum, den Ablauf von der Auslegung einer Verzahnung über deren Produktion und Inspektion zu optimieren und Fehler frühzeitig und sicher erkennen zu können.

Die Erfindung kann vor allem in vernetzten Fertigungsprozessen (auch vernetztes Bearbeitungsumfeld genannt) zum Einsatz kommen, um jederzeit auf Veränderungen angemessen und rechtzeitig reagieren zu können.

Die Daten, die hier zum Einsatz kommen, können bei allen Ausführungsformen direkt zwischen den beteiligten Komponenten (z.B. einer verzahnungsbearbeitenden Maschine und einer Messeinrichtung) ausgetauscht werden, oder sie können beispielweise in einer Entwicklungsdatenbank oder in einer Produktionsdatenbank in einem Netzwerk bereitgestellt und von dort bei Bedarf abgerufen werden.

Die Bezugszeichenliste ist Bestandteil der Offenbarung.

ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben.

FIG. 1     zeigt eine schematische Ansicht einer verzahnungsbearbeitenden Maschine und einer Messeinrichtung des Standes der Technik, die kommunikationstechnisch miteinander verbunden sind;

FIG. 2     zeigt eine schematische Blockdarstellung eines Bearbeitungsumfeldes des Standes der Technik, das im gezeigten Beispiel eine verzahnungsbearbeitende Maschine, eine Messeinrichtung, eine Software und einen Prozess umfasst;

FIG. 3     zeigt ein schematisches Diagramm in dem beispielhaft die Häufigkeit von Referenzmassänderungen und die entsprechende Kurve einer Normalverteilung einer Maschine aufgetragen ist;

FIG. 4     zeigt ein schematisches Diagramm in dem einerseits die Details des Diagramms der Fig. 3 und andererseits Details einer plötzlichen Änderung aufgetragen sind;

FIG. 5A     zeigt eine schematische Blockdarstellung eines beispielhaften vernetzten Bearbeitungsumfeldes der Erfindung, das im gezeigten Beispiel eine verzahnungsbearbeitende Maschine, eine Messeinrichtung, eine Software, einen Prozess und ein Analysemodul (hier in einem tragbaren Rechner) umfasst;

FIG. 5B     zeigt eine schematische Blockdarstellung einer beispielhaften Implementierung des Analysemoduls auf einem ersten (stationären) Rechner und einem zweiten (tragbaren) Rechner;

FIG. 6A     zeigt ein schematisches Diagramm in dem einerseits die Häufigkeit von Referenzmassänderungen und die entsprechende Kurve einer Normalverteilung der X-Achse einer Maschine und andererseits Details einer plötzlichen Änderung aufgetragen sind;

FIG. 6B     zeigt ein schematisches Diagramm in dem einerseits die Häufigkeit von Referenzmassänderungen und die entsprechende Kurve einer Normalverteilung der Y-Achse der Maschine und andererseits Details einer plötzlichen Änderung aufgetragen sind;

**FIG. 6C** zeigt ein schematisches Diagramm in dem einerseits die Häufigkeit von Referenzmassänderungen und die entsprechende Kurve einer Normalverteilung der Z-Achse der Maschine und andererseits Details einer plötzlichen Änderung aufgetragen sind;

**FIG. 6D** zeigt ein schematisches Diagramm in dem einerseits die Häufigkeit von Referenzmassänderungen und die entsprechende Kurve einer Normalverteilung der C-Achse der Maschine und andererseits Details einer plötzlichen Änderung aufgetragen sind;

**FIG. 7A** zeigt ein schematisches Zeitdiagramm, das z.B. aus der Fig. 6A abgeleitet wurde;

**FIG. 7B** zeigt ein schematisches Zeitdiagramm, das z.B. aus der Fig. 6B abgeleitet wurde;

**FIG. 7C** zeigt ein schematisches Zeitdiagramm, das z.B. aus der Fig. 6C abgeleitet wurde;

**FIG. 7D** zeigt ein schematisches Zeitdiagramm, das z.B. aus der Fig. 6D abgeleitet wurde;

**FIG. 8** zeigt eine schematische Blockdarstellung eines tragbaren Rechners, der die Zeitdiagramme der Figuren 7A bis 7D anzeigt und der eine Nachricht anzeigt;

**FIG. 9** zeigt ein schematisches Flussdiagramm einer weiteren Ausführungsform der Erfindung.

Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Man kann die Änderungen der eingangs erwähnten Referenzmaße (d.h. die geometrische Veränderung der Einstellwerte der Maschine 10) über die Zeit t betrachten und z.B. unter Zuhilfenahme statistischer Methoden auswerten. Dies wird im Folgenden anhand eines einfachen Beispiels erläutert.

Wenn man z.B. davon ausgeht, dass die Abweichung ΔVD nur eine einzige Abweichung anzeigt, die z.B. auf eine Verlagerung der X-Achse der Maschine 10 hinweist (z.B. eine Ausdehnung aufgrund von Temperatureinflüssen), dann würde in diesem Sonderfall für die Referenzmaßänderungen das Folgende gelten:

$$\Delta X_{ref} = X^* - X \neq 0$$

$$\Delta Y_{ref} = 0$$

$$\Delta Z_{ref} = 0$$

$$\Delta C_{ref} = 0.$$

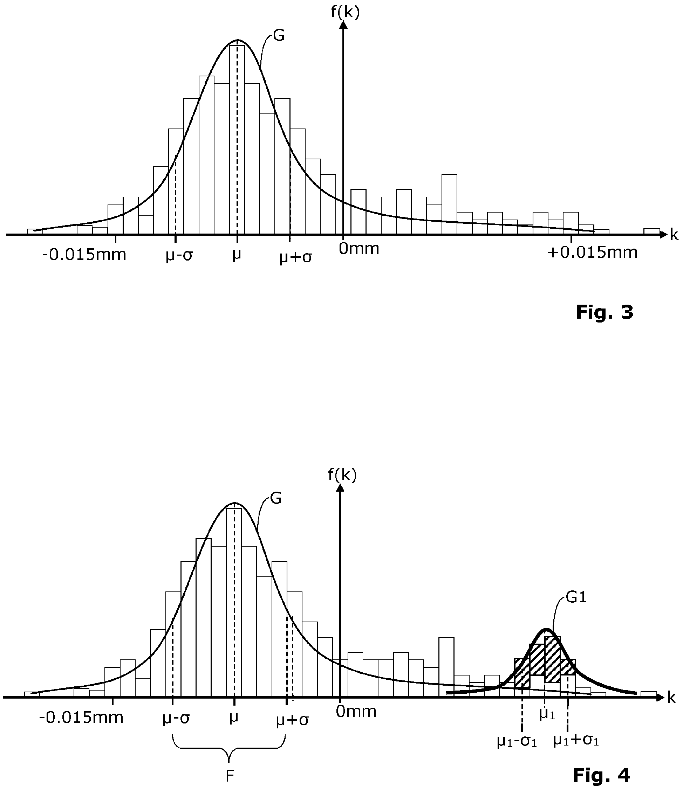

In dem Diagramm der Fig. 3 ist beispielhaft und schematisiert die statistische Auswertung der entsprechenden Maschine 10 mit einer Referenzmaßänderungen der X-Achse über einen längeren Zeitraum gezeigt. Auf der horizontalen Achse des Diagramms sind die Änderungen k der Referenzmaße der X-Achse in Millimetern aufgetragen und auf der senkrechten Achse ist die statistische Häufigkeit f(k) dargestellt. Bei diesem Beispiel ergibt sich eine Art Normalverteilung, die als Kurve G gezeigt ist. Die Kurve G hat ein Maximum ungefähr bei μ = -0.007mm. D.h. im Mittel über m (m ist eine natürliche Zahl grösser Null) Fertigungsvorgänge ist die X-Achse der Maschine 10 um 0.007mm kürzer als sie eigentlich sein sollte. In Fig. 3 ist auch die Varianz σ eingezeichnet. Die Formel, die hier zur statistischen Berechnung beispielhaft herangezogen wurde, ist die folgende:

$$f(k) = \frac{1}{\sigma\sqrt{2\pi}} e^{-\frac{1}{2}\left(\frac{k-\mu}{\sigma}\right)^2}$$

Es geht bei der Erfindung nun vor allem um das Ermitteln von Abweichungen von der Norm. In dem Diagramm der Fig. 4 ist wiederum die statistische Auswertung der Maschine 10 mit Referenzmaßänderungen der X-Achse über einen längeren Zeitraum von m Fertigungsvorgängen gezeigt. Die Kurve G der Fig. 4 entspricht der Kurve G der Fig. 3.

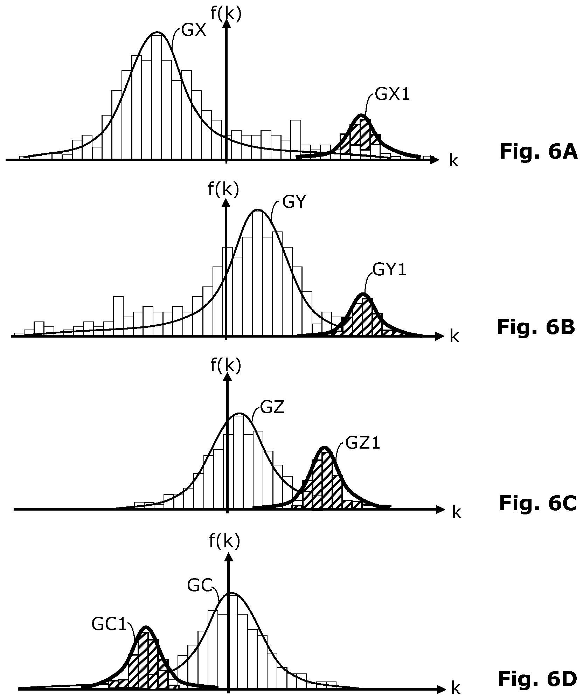

In den Figuren 3, 4 und in den Figuren 6A bis 6D sind jeweils diskrete Werte für die Abweichungen aufgetragen. Die Höhe der dargestellten Balken entspricht z.B. der Anzahl der Fertigungsvorgänge, bei denen eine bestimmte Abweichung (z.B. in mm) auftrat. Die Tatsache, dass die dargestellten Balken eine konstante Breite (auch Quantisierung genannt) haben, zeigt an, dass die geometrischen Abweichungen (z.B. in mm) in diskreten Stufen ermittelt werden.

Anstatt einer solchen Balkendarstellung, können bei allen Ausführungsformen aber auch andere statistische Auswertungs- und/oder Darstellungsverfahren verwendet werden.

Die statistische Auswertung der letzten n Fertigungsvorgänge (hier statistische Kurzzeitauswertung genannt) zeigt nun plötzlich eine deutliche Referenzmaßänderung (n ist eine natürliche Zahl grösser Null, wobei gilt: n ist kleiner m). Die entsprechenden Werte sind in Fig. 4 durch schraffierte Kästchen dargestellt und es ergibt sich für diese n Fertigungsvorgänge eine andere Normalverteilung, die als Kurve G1 gezeigt ist. Die Kurve G1 hat ein Maximum ungefähr bei $\mu_1$ = +0.014mm. D.h. im Mittel über n Fertigungsvorgänge ist die X-Achse der Maschine 10 um 0.014mm länger als sie eigentlich sein sollte (stets bezogen auf den Nullpunkt bei 0mm). In Fig. 4 ist auch die Varianz $\sigma_1$ zur Kurve G1 eingezeichnet.

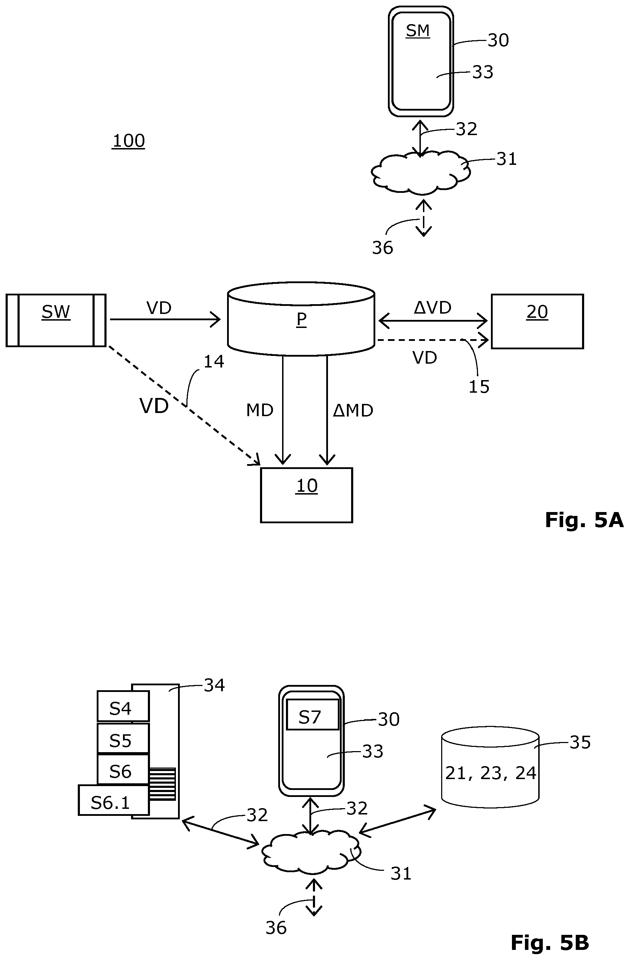

Wenn nun z.B. durch den Einsatz eines erfindungsgemässen Analysemoduls SM (z.B. als Software-Applikation auf einem tragbaren Rechner 30, wie in Fig. 5A gezeigt, oder als Software-Applikation auf einem tragbaren Rechner 30 und einem stationären Rechner 34, wie in Fig. 5B gezeigt) ein Vergleich des statistischen Langzeitwertes $\mu$ mit dem statistischen Kurzzeitwert $\mu1$ vorgenommen wird, so können Abweichungen, wie sie in Fig. 4 beispielhaft gezeigt sind, automatisch erkannt werden. Der hier beschriebene Vergleich der statistischen Mittelwerte $\mu$ und $\mu1$ ist als Beispiel für eine statistische Auswertung zu verstehen. Es können bei allen Ausführungsformen auch andere statistische Auswertungen mittels des Analysemoduls SM vorgenommen werden.

Ein entsprechendes Ausführungsbeispiel der Erfindung ist in Fig. 5A gezeigt. Die Fig. 5A baut auf der Fig. 2 auf. Es wird daher auch auf die Beschreibung der Fig. 2 verwiesen.

Es ist in Fig. 5A ein vernetztes Bearbeitungsumfeld 100 mit einem tragbaren Rechner 30 (z.B. ein Mobiltelefon oder ein PDA) gezeigt. Der Rechner 30 kann mit dem Bearbeitungsumfeld 100 vernetzt sein. Diese Vernetzung ist in Fig. 5A durch eine Wolke 31 dargestellt.

Bei allen Ausführungsformen der Erfindung kommt ein Analysemodul SM zum Einsatz, das dazu ausgelegt ist, statistische Werte mindestens einer Maschine 10 zu verarbeiten, um Abweichungen (wie beispielhaft in Fig. 4 gezeigt) automatisch zu erkennen.

Das Analysemodul SM kann bei allen Ausführungsformen als Softwaremodul realisiert sein oder es kann bei allen Ausführungsformen in eine andere Software (z.B. in die Software SW und/oder in den Prozess P) integriert sein, oder das Analysemodul SM kann als ein Modul einer Software-Suite bereitgestellt werden.

Vorzugsweise kommt bei allen Ausführungsformen ein Analysemodul SM zum Einsatz, das mindestens eine (Hardware und/oder Software) Schnittstelle 32 umfasst, die zur Übernahme von Daten einer Maschine 10 und/oder einer Messeinrichtung 20 und/oder einer anderen Software SW und/oder eines Prozesses P ausgelegt ist.

Entweder können die Maschine 10, die Messeinrichtung 20, die andere Software SW oder der Prozess P eine (Hardware und/oder Software) Schnittstelle aufweisen, die jeweils Daten an das Analysemodul SM übergibt (Push-Ansatz genannt). Oder das Analysemodul SM ist dazu ausgelegt, Daten von einer Maschine 10, oder von einer Messeinrichtung 20, von der anderen Software SW oder von dem Prozess P zu holen (Pull-Ansatz genannt). Es kann bei allen Ausführungsformen auch eine Kombination des Push- und des Pull-Ansatzes zum Einsatz kommen.

Das vernetzte Bearbeitungsumfeld 100 ist dazu ausgelegt das folgende Verfahren zum Überwachen der Maschinengeometrie mindestens einer verzahnungsbearbeitenden Maschine 10 durchzuführen. Dabei werden die folgenden Schritte ausgeführt:

a) Bearbeiten der Verzahnung eines Werkstücks 1 auf der Maschine 10 anhand von Vorgabedaten (z.B. VD, $\Delta$VD, MD, $\Delta$MD),
b) Messen des Werkstücks 1 in einer Messeinrichtung 20 (die Teil der Maschine 10 ist, oder die mit der Maschine 10 verbindbar ist), um Istdaten zu ermitteln,
c) In Bezug Setzen der Istdaten mit den Vorgabedaten (z.B. VD, $\Delta$VD, MD, $\Delta$MD),um so die Abweichung eines geometrischen Einstellwerts mindestens einer Achse X der Maschine 10 zu ermitteln,
d) Speichern der Abweichung des geometrischen Einstellwerts,
e) Wiederholen der Schritte a) - d) beim Bearbeiten der Verzahnung von m weiteren Werkstücken 1,
f) Durchführen einer statistischen Auswertung mehrerer der gespeicherten Abweichungen (z.B. aller m Abweichungen), um aus diesen Abweichungen ein statistisches Referenzmaß (z.B. in Form des statistischen Langzeit-Mittelwerts $\mu$) für die Achse X der Maschine 10 zu ermitteln.

Im Rahmen des Schritts a) können beispielweise bei der erstmaligen und/oder einmaligen Bearbeitung eines Werkstücks 1 die Software SW und der Prozess P zusammenwirken, wie eingangs beschrieben, um der Maschine 10 Maschinendaten MD als Vorgabedaten zur Verfügung zu stellen.

Wie bereits eingangs beschrieben, kann ein erstmalig bearbeitetes Werkstück 1 in einer Messeinrichtung 20 vermessen werden, um dieses erstmalig bearbeitete Werkstück 1 danach in der Maschine 10 nachzubearbeiten, oder um korrigierte Daten für die anschließende Serienproduktion von weiteren identischen Werkstücken 1 zu gewinnen.

Im Rahmen einer Serienproduktion von Werkstücken 1, können im Schritt a) beispielsweise korrigierte Daten (z.B. als Maschinendaten MD zusammen mit den Abweichungen ∆MD oder als Vorgabedaten VD zusammen mit den Abweichungen ∆VD) aus einem Speicher geladen werden.

Im Rahmen der Serienproduktion von Werkstücken 1, können im Schritt b) beispielsweise das erste Werkstück 1 und z.B. jedes weitere 100. Werkstück 1 in der Messeinrichtung 20 vermessen werden, um jeweils von Zeit zu Zeit Referenzmaße und/oder Referenzmaßänderungen zu ermitteln.

Je nach Ausführungsform kann in dem Bearbeitungsumfeld 100 aber auch jedes der m Werkstücke einer Serienproduktion in der Messeinrichtung 20 vermessen werden. Man erhält für jedes der m Werkstücke Referenzmaße und/oder Referenzmaßänderungen. Das Ergebnis einer solchen Messreihe mit m Werkstücken 1 ist in Fig. 4 beispielhaft gezeigt (siehe Kurve G).

D.h. es können je nach Ausführungsform in regelmäßigen oder unregelmäßigen Zeitabständen Änderungen des Referenzmaßes mindestens einer Maschinenachse (z.B. der X-Achse) der Maschine 10 ermittelt werden.

Vorzugsweise wird durch das vernetzte Bearbeitungsumfeld 100 eine gleitende statistische Auswertung jeweils der neusten Messergebnisse (z.B. der letzten n Messergebnisse mit n < m) durchgeführt. Die gleitende statistische Auswertung kann bei allen Ausführungsformen durch ein Element des Bearbeitungsumfeldes 100 (z.B. durch das Analysemodul SM) und/oder durch mehrere Elemente des Bearbeitungsumfeldes 100 (z.B. durch den Prozess P zusammen mit dem erwähnten Analysemodul SM) vorgenommen werden.

Das Analysemodul SM kann bei allen Ausführungsformen z.B. auch ein Master-Modul, das z.B. in der Steuerung 40 der Maschine 10 oder in einem stationären Rechner 34 (siehe Fig. 5B) läuft, und ein Client-Modul umfassen, wobei das Client-Modul z.B. in einem tragbaren Rechner 30 ausgeführt wird.

Diese gleitende statistische Auswertung dient primär dazu "deutliche" Änderungen des Referenzmaßes im Vergleich zu zeitlich älteren Referenzmaßen zu erkennen. Wenn man eine solche statistische Auswertung kumuliert über alle m bisherigen Änderungen des Referenzmaßes durchführen würde, so wären unvermittelte Abweichungen kaum zu erkennen.

Es geht hier primär um das Erkennen einer Häufung von "deutlichen" Änderungen des Referenzmaßes. Eine solche Häufung ist in Fig. 4 durch die Kurve G1 gezeigt. Im gezeigten Beispiel hat sich ein Nebenmaximum (gemittelt über n Werkstücke 1) bei einem Mittelwert $\mu_1$ ergeben. Dieses Nebenmaximum weicht deutlich von dem Hauptmaximum $\mu$ (gemittelt über m Werkstücke 1) ab.

Als "deutliche" Änderung des Referenzmaßes wird bei bevorzugten Ausführungsformen der Erfindung eine Abweichung bezeichnet, die mindestens 20% des Mittelwerts $\mu$ beträgt. D.h. eine deutliche Abweichung liegt definitionsgemäß dann vor, wenn $\mu_1$ um 20% grösser oder kleiner ist als $\mu$. Bei dem Kriterium, das hier zum Erkennen einer "deutlichen" Änderung herangezogen wird, handelt es sich um ein relatives Kriterium. Der relative Schwellenwert wurde hier bei 20% festgelegt.

Als "deutliche" Änderung des Referenzmaßes wird bei besonders bevorzugten Ausführungsformen eine Abweichung bezeichnet, deren Mittelwert $\mu_1$ außerhalb des Fensters F (siehe Fig. 4) liegt, das durch die Varianz $\sigma$ des Langzeit-Mittels $\mu$ wie folgt definiert ist:

$$\mu - \sigma < F < \mu + \sigma$$

D.h. eine deutliche Abweichung liegt bei diesen besonders bevorzugten Ausführungsformen definitionsgemäß dann vor, wenn $\mu_1$ kleiner ist als $\mu - \sigma$, oder wenn $\mu_1$ grösser ist als $\mu + \sigma$. Auch hier handelt es sich um ein relatives Kriterium, da das Kriterium, das hier zum Erkennen einer "deutlichen" Änderung herangezogen wird, relativ zu dem Fenster F definiert ist. Als relativer Schwellenwert wurde hier das Fenster F festgelegt.

Als "deutliche" Änderung des Referenzmaßes kann bei allen Ausführungsformen auch eine Abweichung bezeichnet werden, die ein anderes Vorzeichen hat als der Mittelwert $\mu$. D.h. eine deutliche Abweichung liegt bei diesen Ausführungsformen definitionsgemäß dann vor, wenn der Mittelwert $\mu$ beispielsweise kleiner Null ist und wenn $\mu_1$ grösser Null ist (wie in Fig. 4 gezeigt), oder umgekehrt. Als Schwellenwert wurde hier ein Vorzeichenwechsel festgelegt.

Als "deutliche" Änderung des Referenzmaßes kann bei allen Ausführungsformen auch eine Abweichung bezeichnet werden, die sich dadurch ergibt, dass die Varianz $\sigma$ des Langzeit-Mittels $\mu$ eine Tendenz zeigt. Eine Tendenz kann z.B. dadurch erkannt werden, dass das Fenster F, wie weiter oben definiert, grösser oder kleiner wird.

Eine "deutliche" Änderung des Referenzmaßes kann bei allen Ausführungsformen auch dann als gegeben angenommen werden, wenn sich im Rahmen der statistischen Kurzzeitauswertung keine Normalverteilung z.B. über eine Anzahl von n = 10 Fertigungsvorgängen ermitteln lässt. Die Tatsache, dass sich die letzten Änderungen des Referenzmaßes nicht durch eine Normalverteilung beschreiben lassen, spricht für das Vorliegen eines Sonderfalls, der dem Benutzer z.B. durch das Auslösen einer Reaktion zur Kenntnis gebracht werden sollte.

Je nach Ausführungsform kann das Analysemodul SM auch so ausgelegt sein, dass der Benutzer z.B. durch das Vorgeben eines relativen und/oder absoluten Schwellenwerts eine Änderung des Referenzmaßes als deutliche Änderung definieren kann.

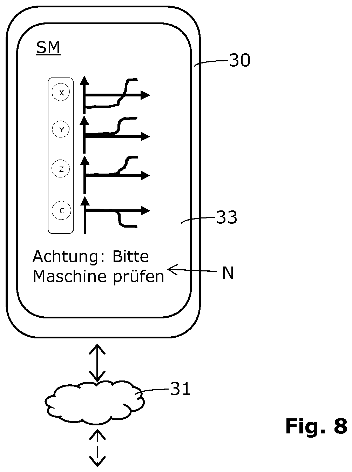

Vorzugsweise ist das Bearbeitungsumfeld 100 bei allen Ausführungsformen so ausgelegt, dass beim Vorliegen einer "deutlichen" Änderung eine Aktion ausgelöst wird. Vorzugsweise ist das Analysemodul SM bei allen Ausführungsformen dazu ausgelegt eine Aktion auszulösen oder die Aktion selbst auszuführen (z.B. durch das Anzeigen einer Nachricht N auf einem Display, wie in Fig. 8 gezeigt).

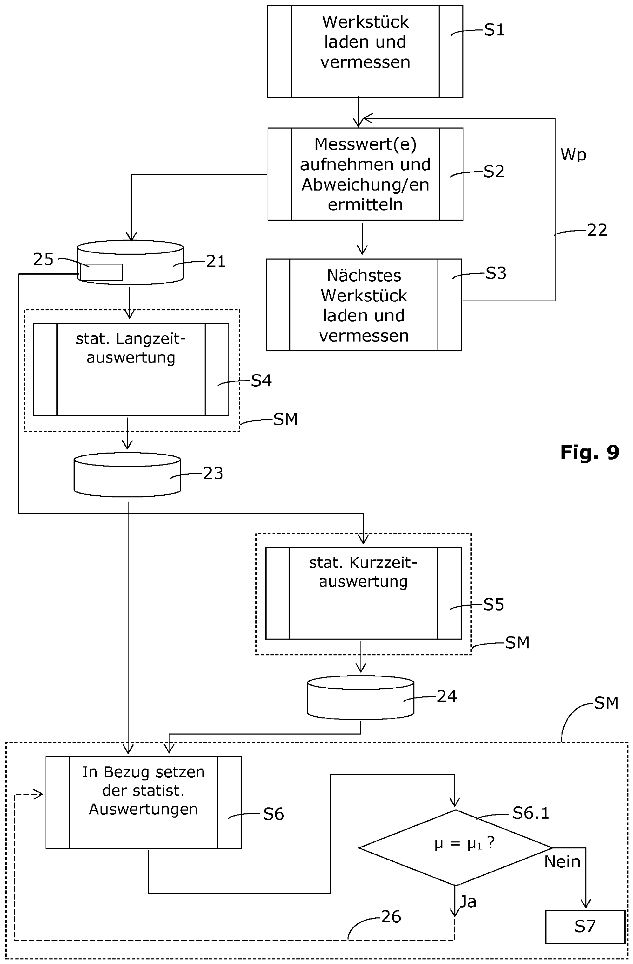

Das Auslösen einer Aktion (Schritt S7 in Fig. 9) kann bei allen Ausführungsformen beispielsweise einen oder mehrere der folgenden Schritte umfassen:

- Ausgeben einer akustischen Warnung;
- Ausgeben einer optischen Warnung, vorzugsweise als Anzeige auf einem Display 12 (Fig. 1) oder 33 (Fig. 5A);
- Absetzen einer Nachricht N (z.B. per SMS);
- Versenden eine E-Mail Nachricht.

In dem beispielhaft zu verstehenden Bearbeitungsumfeld 100, kann eine "deutliche" Änderung des Referenzmaßes zum Beispiel zurückzuführen sein auf den unsachgemäßen Umgang mit der Maschine 10, wobei z.B. die X-Achse durch eine Kollision einen Schaden genommen hat.

Anhand der Figuren 6A bis 6D wird eine weitere Ausführungsform der Erfindung beschrieben. Es geht erneut um ein Bearbeitungsumfeld 100, das eine verzahnungsbearbeitende Maschine 10 und eine Messeinrichtung 20 umfasst. Die Maschine 10 hat erneut drei NC-gesteuerte Linearachsen X, Y, Z und eine NC-gesteuerte Schwenkachse C. Diesmal werden nicht nur die Änderungen des Referenzmaßes der X-Achse, sondern auch die Änderungen der Referenzmaße aller drei weiteren Achsen Y, Z und C statistisch ausgewertet. In jeder der Figuren 6A bis 6D ist je eine statistische Langzeitauswertung (z.B. über m Bearbeitungszyklen) und eine gleitende statistische Kurzzeitauswertung (z.B. über n Bearbeitungszyklen) gezeigt. Das Ergebnis der statistischen Langzeitauswertung der X-Achse (siehe Fig. 6A) kann durch eine Normalkurve GX und das Ergebnis der statistischen Kurzzeitauswertung durch eine Normalkurve GX1 dargestellt werden. Das Ergebnis der statistischen Langzeitauswertung der Y-Achse (siehe Fig. 6B) ist durch eine Normalkurve GY und das Ergebnis der statistischen Kurzzeitauswertung durch eine Normalkurve GY1 dargestellt. Das Ergebnis der statistischen Langzeitauswertung der Z-Achse (siehe Fig. 6C) ist durch eine Normalkurve GZ und das Ergebnis der statistischen Kurzzeitauswertung durch eine Normalkurve GZ1 dargestellt. Das Ergebnis der statistischen Langzeitauswertung der C-Achse (siehe Fig. 6D) ist durch eine Normalkurve GC und das Ergebnis der statistischen Kurzzeitauswertung durch eine Normalkurve GC1 dargestellt.

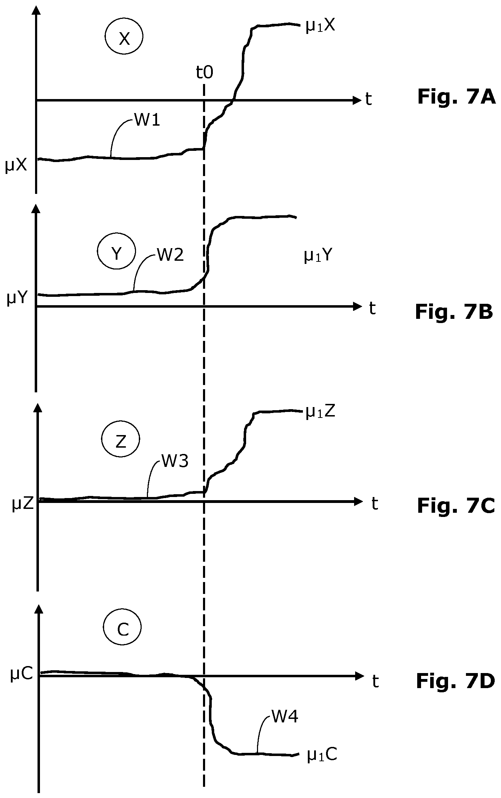

Anhand der Figuren 6A bis 6D ist zu erkennen, dass bei allen vier Achsen eine deutliche Änderung aufgetreten ist. Das Auftreten dieser Änderungen kann auch anhand von Zeitdiagrammen dargestellt werden, wie schematisch und beispielhaft in den Figuren 7A bis 7D gezeigt.

Die Zeitdiagramme der Figuren 7A bis 7D können beispielweise abgeleitet werden aus den Figuren 6A bis 6D und/oder aus den Daten, die den statistischen Auswertungen der Figuren 6A bis 6D zugrunde lagen.

Jeder der vier Achsen X, Y, Z und C kann beispielsweise eine Kurve W1 - W4 im Zeitdiagramm zugeordnet werden, die jeweils den Verlauf des Mittelwerts $\mu$ über die Zeit t zeigt. In Fig. 7A ist der entsprechende Zeitverlauf des Mittelwerts $\mu X$ der X-Achse über die Zeit t dargestellt. Über einen längeren Zeitraum lag der Mittelwert $\mu X$ bei ca. = -0.007mm. Ab einem gewissen Zeitpunkt, der hier mit t0 bezeichnet ist, hat sich der Mittelwert auf einen Wert $\mu_1 X$ verändert, der nun bei ca. 0.014mm deutlich im positiven Bereich liegt. In Fig. 7B ist der entsprechende Zeitverlauf des Mittelwerts $\mu Y$ der Y-Achse über die Zeit t dargestellt. Über einen längeren Zeitraum lag der Mittelwert $\mu Y$ bei ca. = +0.003mm. Ungefähr im Zeitpunkt t0 hat sich der Mittelwert auf einen Wert $\mu_1 Y$ bei ca. 0.015mm verändert. In Fig. 7C ist der entsprechende Zeitverlauf des Mittelwerts $\mu Z$ der Z-Achse über die Zeit t dargestellt. Über einen längeren Zeitraum lag der Mittelwert $\mu Z$ bei ca. = +0.001mm. Ungefähr im Zeitpunkt t0 hat sich der Mittelwert auf einen Wert $\mu_1 Z$ bei ca. +0.01mm verändert. In Fig. 7D ist der entsprechende Zeitverlauf des Mittelwerts $\mu C$ der C-Achse über die Zeit t dargestellt. Über einen längeren Zeitraum lag der Mittelwert $\mu C$, der knapp über Null im positiven Bereich. Ungefähr im Zeitpunkt t0 hat sich der Mittelwert auf einen Wert $\mu_1 C$ bei ca. -0.008mm verändert. Die Darstellungen der Figuren 6A bis 7D sind nicht maßstäblich und die hier gemachten Zahlenangaben sind als Beispiele zu verstehen.

Aufgrund der Tatsache, dass es sich jeweils um statistische Langzeitauswertungen und statistischen Kurzzeitauswertungen handelt, fallen einzelne Ausreißer der Messungen nicht stark ins Gewicht. Die statistische Auswertung führt zu einer Art Filterung, bei der nur Werte (Änderungen) durchschlagen, die mehrfach auftreten.

Der entsprechende (rechnerische) Filter, der bei der statistischen Kurzzeitauswertung zum Einsatz kommen kann, kann entweder mit einer fixen Schwelle arbeiten, oder er kann mit einer Schwelle arbeiten, die vorgebbar ist (z.B. durch einen Benutzer). Als eine Art Schwelle kann z.B. die Zahl q dienen (wobei q >> 0 und q << m). Über die Schwelle q kann die Empfindlichkeit der statistischen Kurzzeit-Auswertung vorgegeben werden. Falls q = 1 wäre, so würde jeder einmalige Messaussreißer bereits zum Auslösen einer Aktion führen. Damit die Empfindlichkeit nicht zu hoch ist sollte gelten: q > > 0.

Die Schwelle q, falls vorhanden, kann bei allen Ausführungsformen als absoluter (z.B. q = 10) oder als relativer Schwellenwert (z.B. q = m/10) vorgegeben werden.

Vorzugsweise wird hier ein Kompromiss gesucht zwischen einer zu empfindlichen Auswertung, die bereits beim einmaligen Auftreten (z.B. q=1) einer Abweichung eine Aktion auslöst, und einer Auswertung, die zu spät und mit einer zeitlichen Verzögerung erst auf das gehäufte Auftreten von Abweichungen hinweist.

Die Zahl der Messungen m kann bei allen Ausführungsformen über einen offenen Zeitraum (z.B. mehrere Tage oder Wochen) fortgeschrieben und im Rahmen der statistischen Langzeitauswertungen ausgewertet werden.

Die Zahl der Messungen m kann bei allen Ausführungsformen aber auch über einen begrenzten Zeitraum (z.B. durch eine absolute Zahl m = 100 oder durch ein Zeitfenster z.B. von dem Zeitpunkt ab dem die Maschine 10 warmgelaufen ist bis zum Abschalten der Maschine am Abend) fortgeschrieben und im Rahmen der statistischen Langzeitauswertungen ausgewertet werden.

Anhand der Figuren 7A bis 7D wird nun ein weiteres optionales Merkmal der Erfindung beschrieben. Es können, wie bereits beschrieben, verschiedene Schwellenwerte und/oder Filtergrößen vorgegeben sein oder werden, um das Verhalten der rechnerischen Auswertung und das Auslösen einer Reaktion zu beeinflussen.

Bei Ausführungsformen, bei denen die Abweichungen von mehr als nur einer Achse ausgewertet werden, kann ein Regelsatz zum Einsatz gebracht werden, der es erlaubt den Verlauf der Kurven W1, W2, W3 und W4 miteinander in einen (zeitlichen) Bezug zu setzen.

Ein Regelsatz kann bei allen Ausführungsformen auch zum Einsatz gebracht werden, um die Kurven der Figuren 6A bis 6D auszuwerten und miteinander in einen Bezug zu setzen.

Das Kriterium, welches das Auftreten einer deutlichen Änderung definiert, kann beispielsweise wie folgt festgelegt sein (die folgenden Beispiele können bei allen Ausführungsformen zur Anwendung kommen):

- Falls mindestens zwei der Kurven W1, W2, W3 und W4 innerhalb eines Zeitfensters (von z.B. 10 Minuten und/oder z.B. n=4 Fertigungsvorgängen) einen Sprung zeigen, so kann dies als deutliche Änderung interpretiert werden; und/oder

- Falls mindestens zwei der Kurven W1, W2, W3 und W4 einen Sprung zeigen, deren Sprunghöhe im Zeitdiagramm mindestens 20% vom Mittelwert der statistischen Langzeitauswertung abweicht, so kann dies als deutliche Änderung interpretiert werden; und/oder

- Falls mindestens zwei der Kurven W1, W2, W3 und W4 einen Nulldurchgang zeigen (wie z.B. die Kurven W1 und W4), so kann dies als deutliche Änderung interpretiert werden.

Diese Kriterien sind als Beispiele zu verstehen und sie können modifiziert, durch weitere Kriterien ergänzt und kombiniert werden.

Es können bei allen Ausführungsformen auch komplexere Regelsätze vorgegeben werden.

Auch können die Definitionen, die im Zusammenhang mit den Figuren 6A bis 6D beschrieben wurden, mit den Definitionen kombiniert werden, die im Zusammenhang mit den Figuren 7A bis 7D beschrieben wurden.

Vorzugsweise wird bei allen Ausführungsformen mindestens eine der beispielhaft genannten Aktionen (Schritt S7) beim Erreichen des Zeitpunkts t0 ausgelöst.

Um den Benutzer jederzeit auf das Vorliegen besonderer Abweichungen hinweisen zu können, kann das Analysemodul SM beispielweise eine Darstellung auf einem Display 33 anzeigen, wie in Fig. 8 angedeutet. Bei der Darstellung, die z.B. auf dem Display 33 eines als Rechner 30 dienenden PDAs gezeigt wird, kann es sich um eine Kopie der in den Figuren 7A bis 7D gezeigten Kurven W1 - W4 handeln, oder es kann eine überarbeitete oder angepasste Version dieser Kurven W1 - W4 gezeigt werden. Als mögliche Aktion (Schritt S7) zeigt das Display 33 des als Rechner 30 dienenden PDAs hier die folgende Nachricht N: "Achtung: Bitte Maschine prüfen".

Anhand eines schematischen Flussdiagramms, das in Fig. 9 gezeigt ist, wird im Folgenden eine weitere Ausführungsform der Erfindung beschrieben.

In einem ersten Schritt S1 wird ein erstes Werkstück 1 in eine Messeinrichtung 20 geladen und dann vermessen. Es werden im Schritt S2 aktuelle Messwert(e) aufgenommen und es werden Abweichungen ΔVD und/oder ΔMD ermittelt. Diese Abweichungen können z.B. durch die Messeinrichtung 20 und/oder durch den Prozess P und/oder durch das Analysemodul SM ermittelt werden. Mindestens ein Wert (z.B. die Abweichung ΔVD für die X-Achse der Maschine 10) kann in einem Speicher 21 abgespeichert werden. Es wird nun ein nächstes Werkstück 1 in die Messeinrichtung 20 geladen und vermessen (Schritt S3). Dann wird dieser Vorgang mehrfach wiederholt, wie in Fig. 9 durch die Schleife 22 dargestellt. Die Anzahl der Wiederholungen Wp oder Durchläufe der Schleife 22 kann hier z.B. mit der Anzahl der Fertigungsvorgänge m gleichgesetzt werden. In diesem Fall (d.h. wenn Wp = m) wird jedes der m durch die Maschine 10 bearbeiteten Werkstücke 1 mit der Messeinrichtung 20 vermessen. Falls z.B. nur jedes zweite Werkstück 1 vermessen wird, so gilt Wp = m/2.

Das Analysemodul SM kann bei allen Ausführungsformen laufend, oder von Zeit zu Zeit, abgespeicherte Werte aus dem Speicher 21 entnehmen und einer ersten statistischen Auswertung unterziehen (Schritt S4). Wie bereits anhand eines Beispiels beschrieben, kann im Rahmen dieser ersten statistischen Auswertung z.B. der Mittelwert $\mu$ errechnet und in einem Speicher 23 gespeichert werden. Der Speicher 21 kann identisch sein mit dem Speicher 23. Das gilt auch für alle weiteren Speicher, die hier erwähnt werden.

Zeitgleich, oder von Zeit zu Zeit, kann das Analysemodul SM abgespeicherte Werte aus dem Speicher 21 entnehmen und einer zweiten statistischen Auswertung unterziehen (Schritt S5). Hier kann das Analysemodul SM je nach Ausführungsform z.B. nur die abgespeicherten Werte der letzten Stunde oder z.B. nur die letzten n abgespeicherten Werte entnehmen und verarbeiten. Bei der zweiten statistischen Auswertung handelt es sich um die bereits erwähnte statistische Kurzzeitauswertung, die hier auch als gleitende Auswertung bezeichnet wird. Die Tatsache, dass im Rahmen der statistischen Kurzzeitauswertung nur eine Untermenge der jeweils neusten Werte aus dem Speicher 21 entnommen und statistisch ausgewertet werden, ist in Fig. 9 durch ein kleines Fenster 25 am Speicher 21 angedeutet. Wie bereits anhand eines Beispiels beschrieben, kann im Rahmen dieser zweiten statistischen Auswertung z.B. der Mittelwert $\mu_1$ errechnet und in einem Speicher 24 gespeichert werden.

Die Schritte S4 und S5 können bei allen Ausführungsformen auch zeitgleich durchgeführt werden.

Die Berechnung der Mittelwerte $\mu$ und $\mu_1$ ist nur als ein mögliches Beispiel für die statistische Auswertung zu verstehen. Es können hier auch andere statistisches Auswertungen durch das Analysemodul SM vorgenommen werden.

In einem weiteren Schritt S6, werden die Ergebnisse der statistischen Kurzzeitauswertung und der statistischen Langzeitauswertung miteinander in Bezug gesetzt, um "deutliche" Abweichungen erkennen zu können. Wie in Fig. 9 beispielhaft gezeigt, werden zu diesem Zweck die entsprechende Ergebnisse aus den Speichern 23 und 24 durch das Analysemodul SM verglichen.

Je nachdem, welche Definition und/oder welcher Regelsatz für Ermitteln einer "deutlichen" Abweichung zum Einsatz kommt (einige Beispiele wurden bereits genannt), sieht das miteinander in Bezug Setzen unterschiedlich aus.

Im einfachsten aller Fälle, wird im Rahmen des Schritts S6 geprüft, ob gilt $\mu = \mu_1$. Falls $\mu$ gleich $\mu_1$ sein sollte, so liegt keine Änderung vor, die als deutliche Änderung bezeichnet werden könnte. Falls in diesem Beispiel $\mu$ ungleich $\mu_1$ sein sollte, so liegt per Definition eine deutliche Änderung vor und es würde eine Aktion (Schritt S7) ausgelöst. Dieses einfache Beispiel ist in Fig. 9 dargestellt, wobei der Vergleichsprozess, der als Teil des Schritts S6 betrachtet wird, hier als Teilschritt S6.1 bezeichnet wurde. Falls $\mu$ gleich $\mu_1$ sein sollte, d.h. falls keine Änderung vorliegt, so kann das Verfahren dieser Ausführungsform zurück zum Schritt S6 führen, wie in Fig. 9 durch die Schleife 26 dargestellt.

Bei dem Ausführungsbeispiel der Fig. 9 werden die Schritte S4, S5, S6, S6.1 und S7 durch das Analysemodul SM durchgeführt oder durch dieses kontrolliert.

Es ist für die vorliegende Erfindung jedoch unerheblich wo diese einzelnen Schritte durchgeführt werden. So kann z.B. der Schritt S4 und/oder der Schritt S5 in der Maschine 10 durchgeführt werden, während die verbleibenden Schritte z.B. in einem (stationären) Rechner (z.B. einem Rechner 34) durchgeführt werden, der mit dem Bearbeitungsumfeld 100 vernetzt ist.

In Fig. 5B ist ein weiteres Ausführungsbeispiel schematisch dargestellt. Die Schritte S4, S5, S6 und S6.1 können z.B. in einem (stationären) Rechner 34 durchgeführt werden und der Schritt S7 kann z.B. in einer solchen vernetzten Implementierung des Bearbeitungsumfelds in eine Applikation ausgelagert sein, die auf einem tragbaren Rechner 30 lediglich eine Nachricht N und/oder die Diagramme (wie in Fig. 8 gezeigt) zur Anzeige auf einem Display 33 bringt. Die Rechner 30 und 34, sowie ein optionaler Netzwerkspeicher 35 können über ein Netzwerk 31 miteinander kommunizieren. Das Netzwerk 31 kann wiederum in die Kommunikationsinfrastruktur des Bearbeitungsumfelds 100 eingebunden sein, wie in Fig. 5A und 5B durch den Pfeil 36 angedeutet.

Bezugszeichenliste

| | |
|---|---|
| Werkstück(e) | 1 |
| | |
| (verzahnungsbearbeitende) Maschine | 10 |
| | |
| Display | 12 |
| Kommunikationsverbindung | 13 |

(fortgesetzt)

| | |
|---|---|
| Pfad | 14 |
| Pfad | 15 |
| | |
| Messeinrichtung / Messvorrichtung | 20 |
| Speicher | 21 |
| Schleife | 22 |
| Speicher | 23 |
| Speicher | 24 |
| Fenster | 25 |
| Schleife | 26 |
| Rechner | 30 |
| Wolke / Vernetzung | 31 |
| Schnittstelle | 32 |
| Display | 33 |
| Rechner | 34 |
| (Netzwerk-)Speicher | 35 |
| Pfeil | 36 |
| NC-Steuerung | 40 |
| | |
| Bearbeitungsumfeld /Vorrichtung | 100 |
| | |
| geänderter geometrischer Einstellwert | C* |
| Schwenkachse | C |
| Abweichungen | $\Delta VD$ |
| Abweichungen | $\Delta MD$ |
| Referenzmaßänderungen | $\Delta X_{ref}$, $\Delta Y_{ref}$, $\Delta Z_{ref}$, $\Delta C_{ref}$ |
| Fenster | F |
| Häufigkeit | f(k) |
| Kurven | G, G1, GX1, GY, GY1, GZ, GZ1, GC, GC1 |
| Änderung | k |
| Anzahl der Fertigungsvorgänge | m |
| Maschinendaten | MD |
| Anzahl der Fertigungsvorgänge | n |
| Nachricht | N |
| Mittelwerte | $\mu$, $\mu X$, $\mu Y$, $\mu Z$, $\mu C$ |
| Mittelwerte | $\mu_1$, $\mu_1 X$, $\mu_1 Y$, $\mu_1 Z$, $\mu_1 C$ |
| Prozess | P |
| Schwelle | q |
| Schritte | S1, S2, S3, S4, S5, S6, S6.1, S7 |

## EP 3 229 088 B1

| Analysemodul (Softwaremodul) | SM |
|---|---|
| Software | SW |
| Varianz | $\sigma$ |
| Varianz | $\sigma_1$ |
| Zeit | t |
| Zeitpunkt | T0 |
| (Linear-)Achsen | X, Y, Z |
| geänderte geometrische Einstellwerte | X*, Y*, Z* |
| Kurven | W1, W2, W3, W4 |
| Wiederholungen | Wp |
| Vorgabedaten (z.B. Solldaten) | VD |

**Patentansprüche**

1. Verfahren zum Überwachen der Maschinengeometrie mindestens einer verzahnungsbearbeitenden Maschine (10) mit den folgenden Schritten:

   a) Messen (S1, S3) eines Werkstücks (1) in einer Messeinrichtung (20), um Istdaten zu ermitteln, wobei es sich um ein Werkstück (1) handelt, das zuvor in der Maschine (10) anhand von Vorgabedaten (VD, ΔVD, MD, ΔMD) bearbeitet wurde,
   b) In Bezug Setzen der Istdaten mit den Vorgabedaten (VD, ΔVD, MD, ΔMD),um so die Abweichung eines geometrischen Einstellwerts (X*) mindestens einer Achse (X) der Maschine (10) zu ermitteln,
   c) Speichern der Abweichung des geometrischen Einstellwerts (X*),
   d) Wiederholen der Schritte a) - c) nach dem Bearbeiten weiterer Werkstücke (1) in der Maschine (10),
   e) Durchführen einer statistischen Auswertung (S4, S5) mehrerer der gespeicherten Abweichungen, um eine geometrische Veränderung der Achse (X) der Maschine (10) unter Berücksichtigung einer vorgegebenen Bedingung und/oder Regel zu ermitteln,
   f) im Rahmen des Schritts e) eine statistische Langzeitauswertung (S4) einer Zahl von m Werkstücken (1) und eine statistische Kurzzeitauswertung (S5) einer Zahl von n Werkstücken (1) durchgeführt wird, wobei gilt: n<m.

2. Verfahren nach Anspruch 1, **dadurch gekennzeichnet, dass** in regelmäßigen oder unregelmäßigen Zeitabständen Änderungen des Referenzmaßes der Achse (X) ermittelt werden.

3. Verfahren nach Anspruch 1 oder 2, **dadurch gekennzeichnet, dass** bei einer deutlichen Änderung des Referenzmaßes im Vergleich zu zeitlich älteren Referenzmaßen eine Aktion (S7) ausgelöst wird.

4. Verfahren nach Anspruch 1, **dadurch gekennzeichnet, dass** die statistische Langzeitauswertung (S4) mit der statistischen Kurzzeitauswertung (S5) in Bezug gesetzt wird (S6), um zu ermitteln, ob die Bedingung oder die Regel erfüllt ist, die das Vorliegen einer deutlichen Änderung definiert.

5. Verfahren nach Anspruch 1 oder 4, **dadurch gekennzeichnet, dass** ermittelt wird, ob eine oder mehrere der folgenden Bedingungen erfüllt sind:

   - Liegt neben einem statistischen Hauptmaximum ($\mu$) auch ein statistisches Nebenmaximum ($\mu_1$) vor und ist das statistische Hauptmaximum ($\mu$) ungleich dem statistischen Nebenmaximum ($\mu_1$);
   - Liegt neben einem statistischen Hauptmaximum ($\mu$) auch ein statistisches Nebenmaximum ($\mu_1$) vor und gibt es eine Abweichung von mindestens 20% zwischen dem statistischen Hauptmaximum ($\mu$) auch dem statistischen Nebenmaximum ($\mu_1$);
   - Liegt eine Varianz ($\sigma$) zu einer statistischen Langzeit-Normalverteilung vor und gibt es ein statistisches Nebenmaximum ($\mu_1$), das außerhalb eines Fensters (F) liegt, das wie folgt definiert ist:

$\mu - \sigma < F < \mu + \sigma;$

- Liegt zusätzlich zu einer statistischen Langzeit-Normalverteilung mit einem ersten Hauptmaximum ($\mu$) auch statistische Kurzzeit-Normalverteilung mit einem zweiten Hauptmaximum ($\mu_1$) vor, wobei das erste Hauptmaximum ($\mu$) ein anderes Vorzeichen hat als das zweite Hauptmaximum ($\mu_1$);
- Liegt eine Varianz ($\sigma$) zu einer statistischen Langzeit-Normalverteilung vor, wobei diese Varianz ($\sigma$) eine Tendenz zeigt;
- Liegt eine statistische Kurzzeit-Auswertung vor, die keine Normalverteilung ermöglicht;
- Liegt eine statistische Kurzzeit-Auswertung vor, die einen absoluten oder relativen Schwellenwert überschreitet.

6. Verfahren nach Anspruch 1 oder 4, **dadurch gekennzeichnet, dass** ermittelt wird, ob eine oder mehrere der folgenden Regeln erfüllt sind:

- Liegen mindestens zwei Zeitkurven (W1, W2, W3 und W4) vor, die innerhalb eines Zeitfensters einen Sprung zeigen;
- Liegen mindestens zwei Zeitkurven (W1, W2, W3 und W4) vor, die einen Sprung zeigen, dessen Sprunghöhe im Zeitdiagramm mindestens 20% vom Mittelwert einer statistischen Langzeitauswertung abweicht;
- Liegen mindestens zwei Zeitkurven (W1, W2, W3 und W4) vor, die einen Nulldurchgang zeigen.

7. Verfahren nach Anspruch 4, 5 oder 6, **dadurch gekennzeichnet, dass** eine Aktion (S7) ausgelöst wird, falls die Bedingung oder Regel erfüllt ist, die das Vorliegen einer deutlichen Änderung definiert.

8. Verfahren nach Anspruch 3 oder 7, **dadurch gekennzeichnet, dass** die Aktion (S7) einen oder mehrere der folgenden Schritte umfasst:

- Ausgeben einer akustischen Warnung,
- Ausgeben einer optischen Warnung, vorzugsweise als Anzeige auf einem Display (12; 33),
- Absetzen einer Nachricht,
- Versenden eine E-Mail Nachricht.

9. Vorrichtung (100) mit mindestens einer verzahnungsbearbeitenden Maschine (10) und einer Messeinrichtung (20), **dadurch gekennzeichnet, dass** die Vorrichtung (100) ein Analysemodul (SM) umfasst oder dass die Vorrichtung (100) dazu ausgelegt ist mit einem Analysemodul (SM) verbunden zu werden, welches dazu ausgelegt ist das Verfahren nach den Ansprüchen 1 bis 8 auszuführen und ausgelegt ist mindestens die folgenden Schritte auszuführen oder deren Ausführung auszulösen:

- Durchführen einer statistischen Langzeitauswertung (S4) von Geometriedaten der Maschine (10), die anhand von m Messungen ermittelt wurden, die von der Messeinrichtung(20) an Werkstücken (1) durchgeführt wurden, die zuvor von der Maschine (10) bearbeitet worden sind,
- Durchführen einer statistischen Kurzzeitauswertung (S5) von Geometriedaten der Maschine (10), die anhand von n Messungen ermittelt wurden, die von der Messeinrichtung (20) an Werkstücken (1) durchgeführt wurden, die zuvor von der Maschine (10) bearbeitet worden sind, wobei gilt: n< m
- In Bezug Setzen (S6) der statistischen Langzeitauswertung (S4) mit der statistischen Kurzzeitauswertung (S5), um eine geometrische Veränderung mindestens einer Achse (X) der Maschine (10) zu ermitteln.

10. Vorrichtung (100) nach Anspruch 9, **dadurch gekennzeichnet, dass** das Analysemodul (SM) dazu ausgelegt ist unter Berücksichtigung mindestens einer vorgegebenen Bedingung und/oder einer vorgegebenen Regel zu ermitteln, ob es eine geometrische Veränderung gegeben hat.

11. Vorrichtung (100) nach Anspruch 9 oder 10, **dadurch gekennzeichnet, dass** das Analysemodul (SM) dazu ausgelegt ist eine der folgenden Aktionen (S7) auszulösen, falls eine geometrische Veränderung ermittelt wurde:

- Ausgeben einer akustischen Warnung, und/oder
- Ausgeben einer optischen Warnung, vorzugsweise als Anzeige auf einem Display (12; 33), und/oder
- Absetzen einer Nachricht (N), und/oder
- Versenden eine E-Mail Nachricht.

**EP 3 229 088 B1**

**Claims**

1. Method for monitoring the machine geometry of at least one gear cutting machine (10), having the following steps:

   a) measuring (S1, S3) a workpiece (1) in a measuring device (20) in order to determine actual data, wherein a workpiece (1) is concerned which was previously machined in the machine (10) on the basis of specification data (VD, ΔVD, MD, ΔMD);
   b) correlating the actual data with the specification data (VD, ΔVD, MD, ΔMD) in order to thus determine the deviation of a geometric setting (X*) of at least one axis (X) of the machine (10);
   c) storing the deviation of the geometric setting (X*);
   d) repeating the steps a) - c) after the machining of further workpieces (1) in the machine (10);
   e) performing a statistical evaluation (S4, S5) of several of the stored deviations in order to determine the geometric change in the axis (X) of the machine (10) by considering a predetermined condition and/or rule,
   f) within the scope of step e) carrying out a statistical long-term evaluation (S4) of a number of m workpieces (1) and a statistical short-term evaluation (S5) of a number of n workpieces (1), wherein the following applies: n<m.

2. Method according to claim 1, **characterized in that** changes in the reference dimensions of the axis (X) are determined in regular or irregular intervals.

3. Method according to claim 1 or 2, **characterized in that** an action (S7) is triggered in the event of a distinct change in the reference dimension in comparison with reference dimensions which are older in respect of time.

4. Method according to claim 1, **characterized in that** the statistical long-term evaluation (S4) is correlated (S6) with the statistical short-term evaluation (S5) in order to determine whether the condition or the rule has been fulfilled which defines the presence of a distinct change.

5. A method according to claim 1 or 2, **characterized in that** it is determined whether one or several of the following conditions are fulfilled:

   - if in addition to a statistical main maximum ($\mu$) there is also a statistical secondary maximum ($\mu_1$) and if the statistical main maximum ($\mu$) is not equal to the statistical secondary maximum ($\mu_1$);
   - if in addition to a statistical main maximum ($\mu$) there is also a statistical secondary maximum ($\mu_1$) and if there is a deviation of at least 20% between the statistical main maximum ($\mu$) and also the statistical secondary maximum ($\mu_1$);
   - if there is a variance ($\sigma$) to a statistical long-term normal distribution and if there is a statistical secondary maximum ($\mu_1$) which lies outside of a window (F) which is defined as follows:

$$\mu - \sigma < F < \mu + \sigma \; ;$$

   - if in addition to a statistical long-term normal distribution with a first main maximum ($\mu$) there is also a statistical short-term normal distribution with a second main maximum ($\mu_1$), wherein the first main maximum ($\mu$) has a different sign than the second main maximum ($\mu_1$);
   - if there is a variance ($\sigma$) to a statistical long-term normal distribution, wherein this variance ($\sigma$) shows a tendency;
   - if there is a statistical short-term evaluation which does not allow any normal distribution;
   - if there is a statistical short-term evaluation which exceeds an absolute or relative threshold value.

6. Method according to claim 1 or 4, **characterized in that** it is determined whether one or several of the following rules are fulfilled:

   - if there are at least two time curves (W1, W2, W3 and W4) which show a sudden change within a time window;
   - if there are at least two time curves (W1, W2, W3 and W4) which show a sudden change, whose height of change in the time diagram deviates at least 20% from the mean value of a statistical long-term evaluation;
   - if there are at least two time curves (W1, W2, W3 and W4) which show a zero passage.

7. Method according to claim 4, 5 or 6, **characterized in that** an action (S7) is triggered if the condition or rule is fulfilled which defines the presence of a distinct change.

14

8. Method according to claim 3 or 7, **characterized in that** the action (S7) comprises one or several of the following steps:

   - emitting an acoustic warning;
   - emitting a visual warning, preferably as a notification on a display (12; 33),
   - posting of a message;
   - dispatching an email message.

9. Apparatus (100) having at least one gear cutting machine (10) and a measuring device (20), **characterized in that** the apparatus (100) comprises an analytic module (SM), or that the apparatus (100) is designed to be connected to an analytic module (SM) which is designed to carry out the steps of the method of the claims 1 to 8 and designed to carry out at least the following steps or to trigger their performance:

   - carrying out a statistical long-term evaluation (S4) of geometric data of the machine (10) which were determined on the basis of m measurements that were carried out by the measuring device (20) on workpieces (1) which were previously processed by the machine (10);
   - carrying out a statistical short-term evaluation (S5) of geometric data of the machine (10) which were determined on the basis of n measurements that were carried out by the measuring device (20) on workpieces (1) which were previously processed by the machine (10) wherein it applies: n < m;
   - correlating (S6) the statistical long-term evaluation (S4) with the statistical short-term evaluation (S5) in order to determine a geometric change in at least one axis (X) of the machine (10).

10. Apparatus (100) according to claim 9, **characterized in that** the analytic module (SM) is formed to determine under consideration of at least one predetermined condition and/or a predetermined rule whether a geometric change has occurred.

11. Apparatus (100) according to claim 9 or 10, **characterized in that** the analytic module (SM) is formed to trigger one of the following actions (S7) if a geometric change was determined:

   - output of an acoustic warning, and/or
   - output of a visual warning, preferably as a notification on a display (12; 33), and/or
   - posting of a message (N), and/or
   - dispatch of an email message.

**Revendications**

1. Procédé pour surveiller la géométrie d'au moins une machine à tailler les engrenages (10) comprenant les étapes suivantes :

   a) mesurer (S1, S3) une pièce à usiner (1) dans un dispositif de mesure (20) pour déterminer des données réelles, la pièce à usiner (1) étant une pièce qui a été usinée au préalable dans la machine (10) sur la base de données de spécification (VD, $\Delta$VD, MD, $\Delta$MD),
   b) mettre en relation les données réelles avec les données de spécification (VD, $\Delta$VD, MD, $\Delta$MD),pour définir ainsi l'écart d'une valeur de réglage géométrique (X*) d'au moins d'un axe (X) de la machine (10),
   c) enregistrer l'écart de la valeur de réglage géométrique (X*),
   d) répéter les étapes a) à c) après avoir usiné d'autres pièces à usiner (1) dans la machine (10),
   e) effectuer une analyse statistique (S4, S5) de plusieurs des écarts enregistrés pour déterminer une modification géométrique de l'axe (X) de la machine (10) en prenant en considération une condition et/ou règle prédéterminée,
   f) dans le cadre de l'étape e), effectuer une analyse statistique à long terme (S4) d'un nombre de m pièces à usiner (1) et une analyse statistique à court terme (S5) d'un nombre de n pièces à usiner (1), dans laquelle n < m.

2. Procédé selon la revendication 1, **caractérisé en ce qu'**il est déterminé à des intervalles réguliers ou irréguliers des modifications de la mesure de référence de l'axe (X).

3. Procédé selon la revendication 1 ou 2, **caractérisé en ce que**, en cas de modification notable de la mesure de référence par rapport aux mesures de référence antérieures, il est déclenché une action (S7).

4. Procédé selon la revendication 1, **caractérisé en ce que** l'analyse statistique à long terme (S4) est mise en relation avec l'analyse statistique à court terme (S5) pour déterminer si la condition ou la règle qui définit la présence d'une modification notable est remplie.

5. Procédé selon la revendication 1 ou 4, **caractérisé en ce qu'**il est déterminé si une ou plusieurs des conditions suivantes sont remplies :

- s'il y a, en plus d'un maximum principal statistique ($\mu$), également un maximum secondaire statistique ($\mu_1$) et si le maximum principal statistique ($\mu$) est différent du maximum secondaire statistique ($\mu_1$) ;
- s'il y a, en plus d'un maximum principal statistique ($\mu$), également un maximum secondaire statistique ($\mu_1$) et s'il y a un écart d'au moins 20 % entre le maximum principal statistique ($\mu$) et le maximum secondaire statistique ($\mu_1$) ;
- s'il y a une variance ($\sigma$) par rapport à une distribution normale statistique à long terme et s'il y a un maximum secondaire statistique ($\mu_1$) en-dehors d'une fenêtre (F) définie comme suit :

$$\mu - \sigma < F < \mu + \sigma \, ;$$

- s'il y a, en plus d'une distribution normale statistique à long terme avec un premier maximum principal ($\mu$), également une distribution normale statistique à court terme avec un deuxième maximum principal ($\mu_1$), le premier maximum principal ($\mu$) ayant un autre signe que le deuxième maximum principal ($\mu_1$) ;
- s'il y a une variance ($\sigma$) par rapport à une distribution normale statistique à long terme, cette variance ($\sigma$) indiquant une tendance ;
- s'il y a une analyse statistique à court terme qui ne permet aucune distribution normale ;
- s'il y a une analyse statistique à court terme qui dépasse une valeur seuil absolue ou relative.

6. Procédé selon la revendication 1 ou 4, **caractérisé en ce qu'**il est déterminé si une ou plusieurs des règles suivantes sont remplies :

- s'il y a au moins deux courbes de temps (W1, W2, W3 et W4) qui affichent un bond à l'intérieur d'une fenêtre temporelle ;
- s'il y a au moins deux courbes de temps (W1, W2, W3 et W4) qui affichent un bond dont la hauteur diverge dans le chronogramme d'au moins 20 % par rapport à la valeur moyenne d'une analyse statistique à long terme ;
- s'il y a au moins deux courbes de temps (W1, W2, W3 et W4) qui affichent un passage par zéro.

7. Procédé selon la revendication 4, 5 ou 6, **caractérisé en ce qu'**une action (S7) est déclenchée si la condition ou la règle qui définit la présence d'une modification notable est remplie.

8. Procédé selon la revendication 3 ou 7, **caractérisé en ce que** l'action (S7) comprend une ou plusieurs des étapes suivantes :

- émission d'un signal sonore ;
- émission d'un signal visuel, de préférence sous la forme d'une notification sur un écran (12 ; 33) ;
- émission d'un message,
- envoi d'un message électronique.

9. Dispositif (100) comprenant au moins une machine à tailler les engrenages (10) et un dispositif de mesure (20), **caractérisé en ce que** le dispositif (100) comprend un module d'analyse (SM), ou **en ce que** le dispositif (100) est conçu pour être raccordé à un module d'analyse (SM), lequel est conçu pour effectuer le procédé selon les revendications 1 à 8 et est conçu pour réaliser au moins les étapes suivantes ou déclencher leur réalisation :

- réaliser une analyse statistique à long terme (S4) de données géométriques de la machine (10) qui ont été déterminées sur la base de m mesures effectuées par le dispositif de mesure (20) sur des pièces à usiner (1) préalablement usinées par la machine (10),
- réaliser une analyse statistique à court terme (S5) de données géométriques de la machine (10) qui ont été déterminées sur la base de n mesures effectuées par le dispositif de mesure (20) sur des pièces à usiner (1) préalablement usinées par la machine (10), dans lequel n < m,
- mettre en relation (S6) l'analyse statistique à long terme (S4) avec l'analyse statistique à court terme (S5) pour déterminer une modification géométrique d'au moins un axe (X) de la machine (10).

**10.** Dispositif (100) selon la revendication 9, **caractérisé en ce que** le module d'analyse (SM) est conçu pour déterminer, en prenant en considération au moins une condition prédéterminée et/ou une règle prédéterminée, s'il y a eu une modification géométrique.

**11.** Dispositif (100) selon la revendication 9 ou 10, **caractérisé en ce que** le module d'analyse (SM) est conçu pour déclencher l'une des actions suivantes (S7) s'il est déterminé une modification géométrique :

- émission d'un signal sonore, et/ou
- émission d'un signal visuel, de préférence sous la forme d'une notification sur un écran (12 ; 33), et/ou
- émission d'un message (N), et/ou
- envoi d'un message électronique.

100

10

20

40

12

13

**Fig. 1**

100

SW ──VD──▶ P ◀──ΔVD──▶ 20

14

VD

MD   ΔMD

VD

15

10

**Fig. 2**

Fig. 3

Fig. 4

**Fig. 5A**

**Fig. 5B**

**Fig. 6A**

**Fig. 6B**

**Fig. 6C**

**Fig. 6D**

Fig. 7A

Fig. 7B

Fig. 7C

Fig. 7D

Fig. 8

```
                    ┌──┬─────────────┬──┐
                    │  │  Werkstück  │  ├── S1
                    │  │  laden und  │  │
                    │  │  vermessen  │  │
                    └──┴─────────────┴──┘
                              │
                              ▼
                    ┌──┬─────────────┬──┐         Wp
                    │  │  Messwert(e)│  ├── S2
                    │  │ aufnehmen und│  │
                    │  │ Abweichung/en│  │
                    │  │   ermitteln │  │
                    └──┴─────────────┴──┘          22
```

In Bezug setzen der statist. Auswertungen — S6

stat. Langzeit-auswertung — S4 — SM

stat. Kurzzeit-auswertung — S5 — SM

Nächstes Werkstück laden und vermessen — S3

25    21    23    24

μ = μ₁ ? — S6.1

Nein

Ja

26

S7

SM

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012202609 A1
- DE 102012202599 A1